# EUROPÄISCHE PATENTSCHRIFT

(11) **EP 4 408 740 B1**
(45) Veröffentlichungstag und Bekanntmachung des Hinweises auf die Patenterteilung: **18.03.2026**
(21) Anmeldenummer: 21786848.8
(22) Anmeldetag: 30.09.2021
(51) Int. Cl.: B64C 29/00, B64C 39/02, B64C 27/26, B64C 39/08

(54) **ELEKTRISCH ANGETRIEBENES FLUGGERÄT**
ELECTRICALLY PROPELLED AIRCRAFT
AÉRONEF À PROPULSION ÉLECTRIQUE

(43) Veröffentlichungstag der Anmeldung: 07.08.2024
(73) Patentinhaber: Emagic Aircraft GmbH, 53501 Grafschaft (DE)
(72) Erfinder: KÜGELGEN, Michael, 53501 Grafschaft (DE); SENKEL, Thomas, 72127 Kusterdingen (DE)
(74) Vertreter: Zurhorst, Stefan
(86) Internationale Anmeldenummer: PCT/EP2021/077039
(87) Internationale Veröffentlichungsnummer: WO 2023/051929

(56) Entgegenhaltungen:
- EP-A1- 3 098 161
- EP-A1- 3 774 530
- US-A1- 2016 236 775
- US-A1- 2018 105 267
- US-A1- 2019 127 056

## Beschreibung

Die Erfindung betrifft ein elektrisch angetriebenes Fluggerät mit den Merkmalen nach dem Oberbegriff des Anspruchs 1.

Fluggeräte der klassischen Bauform lassen sich typischerweise in zwei verschiedene Kategorien aufteilen. Zum einen gibt es Flugzeuge mit einem Paar von Tragflächen für einen aerodynamischen Flug, wobei im Regelfall ein in der Vorwärtsrichtung wirkender Flugantrieb vorgesehen ist. Zum anderen gibt es Hubschrauber mit einem hauptsächlich in Richtung der Hochachse wirkende Schwebeantrieb für einen Schwebeflug. Letzterer erlaubt das Starten und Landen selbst unter sehr beengten Platzverhältnissen. Klassische Flugzeuge haben im aerodynamischen Flug einen deutlich besseren Wirkungsgrad, brauchen jedoch viel Platz und Infrastruktur für Start und Landung.

Aktuell gibt es verschiedene Bestrebungen, die Vorteile des einen Konzepts mit den Vorteilen des anderen Konzepts zu verbinden. Es gibt zahlreiche Studien und auch Prototypen von Fluggeräten, welche sowohl Tragflächen für einen aerodynamischen Flug mit einem in Vorwärtsrichtung wirkenden Flugantrieb als auch einen in Hochrichtung wirkenden Schwebeantrieb aufweisen. Die meisten Fluggeräte dieser Art haben als gemeinsames Merkmal, dass der Schwebeantrieb aus dem Konzept des sogenannten Multicopters übernommen wurde. Ein solcher Schwebeantrieb umfasst mehrere Hubluftschrauben, welche in vier Quadranten einer horizontalen Ebene des Fluggerätes angeordnet sind. Auf eine mechanisch aufwendige zyklische Blattverstellung wie beim klassischen Helikopter wird verzichtet. Vielmehr erfolgt eine Steuerung durch individuelle Drehzahlanpassung der einzelnen Hubluftschrauben. Die Hubluftschrauben sind abwechselnd links- und rechtsdrehend ausgebildet, sodass im Grundzustand für die Summe aller Antriebsmomente ein Momentengleichgewicht herrscht. Durch unterschiedliche Leistungs- bzw. Drehzahlansteuerung der einzelnen Hubluftschrauben lässt sich eine Steuerung um alle Raumachsen erzielen, wobei auf einen Heckrotor des klassischen Helikopters verzichtet werden kann.

Ein solches Konzept ist bspw. aus der DE 10 2013 109 392 A1 bekannt. Das dort gezeigte Fluggerät hat ein vorderes und ein hinteres Tragflächenpaar, wobei an den Tragflächenenden je eine Hubluftschraube nach dem Vorbild eines Quadrocopters angeordnet ist. Damit soll ein Schwebeflug für Start und Landung realisiert werden können. Im Reiseflug wird das Fluggerät durch seine beiden Tragflächenpaare getragen, wobei für den Vortrieb ein eigenständiger Flugantrieb zum Einsatz kommt.

Hierbei bleibt jedoch eine Reihe von Schwierigkeiten ungelöst, die bei der praktischen Umsetzung eine beachtliche Rolle spielen. Die Steuerung im Schwebeflug mittels der verschiedenen Hubluftschrauben ist zwar grundsätzlich möglich, wird jedoch mit steigender Größe und Masse des Fluggerätes zunehmend schwieriger. Derweil die an sich bekannte Multikopter-Steuerung im Modelbaumaßstab zu beachtlicher Qualität heranreifen konnte, lässt sich eine solche Steuerung nicht ohne weiteres auf ein größeres, manntragendes Fluggerät hochskalieren. Die hohen Massenträgheiten eines manntragenden Fluggerätes lassen sich nur schwer mit den Mitteln der Coptersteuerung überwinden mit der Folge einer trägen Steuerwirksamkeit.

Ein weiterer, nicht befriedigend gelöster Problemkreis ist die sogenannte Transition, also der Übergang vom Schwebeflug in den aerodynamischen Flug und umgekehrt. Nach dem vertikalen Abheben und mit zunehmender Vorwärtsgeschwindigkeit muss der Hubantrieb so lange das Fluggerät in der Luft halten, bis die Tragflügel den erforderlichen Auftrieb liefern. Umgekehrt, also beim Übergang aus dem Reiseflug heraus in den Schwebeflug zur Landung nähert sich das Fluggerät mit geringer werdender Fluggeschwindigkeit seiner Überziehgeschwindigkeit, bei welcher die Strömung an den Tragflächen abreißt. Um ein damit einhergehendes Durchsacken des Fluggerätes zu vermeiden, muss der Hubantrieb unmittelbar und verzögerungsfrei den entsprechenden Auftrieb bereitstellen. Sowohl bei der Transition vom Schwebeflug in den Reiseflug als auch bei der umgekehrten Transition gibt es also einen Geschwindigkeitsbereich, in dem sich der aerodynamische Auftrieb und der Auftrieb des Hubantriebes überlagern. Sofern keine besonderen Maßnahmen getroffen werden, können undefinierte Flugzustände eintreten, die vom Piloten nicht ohne weiteres ausgesteuert werden können.

Ein aus der US 2018/105267 A1 bekanntes Fluggerät basiert auf einem konventionellen aerodynamischen Konzept mit einer Haupttragfläche und einem dahinter befindlichen Leitwerk. Neben einem in Vorwärtsrichtung wirkenden Flugantrieb gibt es mehrere Hubantriebe, die paarweise vor und hinter der Haupttragfläche angeordnet sind, und deren Hubluftschrauben schräg stehende Drehachsen aufweisen. Die EP 3 098 161 A1 beschreibt ein Fluggerät in Canard-Konfiguration mit insgesamt vier seitlich nach außen geneigten Hubantrieben. Aus der US 2019/0127056 A1 ist ebenfalls ein Fluggerät in Canard-Konfiguration bekannt, wobei insgesamt sechs Hubantriebe mit seitlich nach außen gerichteten Drehachsen vorgesehen sind. Die mittleren beiden Hubantriebe sind außerdem nach vorne geneigt.

Der Erfindung liegt die Aufgabe zugrunde, ein gattungsgemäßes Fluggerät derart weiterzuentwickeln, dass eine gute Flugleistung und eine saubere Steuerbarkeit über den gesamten Geschwindigkeitsbereich einschließlich des Schwebefluges erreicht werden.

Diese Aufgabe wird durch ein Fluggerät mit den Merkmalen des Anspruchs 1 gelöst.

Die Erfindung beruht zunächst auf der Erkenntnis, dass die herkömmliche Coptersteuerung insbesondere um die Hochachse auf dem Drehmomentenhaushalt der einzelnen Hubluftschrauben bzw. der zugehörigen Hubmotoren beruht. Im stationären Schwebeflug ist die Summe all der auf die Hubluftschrauben einwirkenden Antriebsmomente gleich Null und damit ausgeglichen. Folglich erfährt auch das Fluggerät insgesamt kein Moment um die Hochachse, sodass es in seiner vorhandenen Längsausrichtung verbleibt. Falls jedoch die gegensinnig drehenden Hubluftschrauben mit unterschiedlichen Antriebsmomenten (unterschiedliche Beschleunigung bzw. Verzögerung, Beibehaltung unterschiedlicher Drehzahlen der gegensinnig drehenden Hubluftschrauben) betrieben werden, ist das zuvor vorhandene Momentengleichgewicht außer Kraft gesetzt. Es entsteht ein resultierendes Netto-Drehmoment um die Hochachse, welches zu einer Gierbewegung des Fluggerätes führt.

Das nach obigem Konzept erzeugte Netto-Giermoment ist j edoch ab einer gewissen Größe des Fluggerätes und insbesondere bei einer manntragenden Auslegung desselben nicht in dem Maße ausgeprägt, wie es die für den Piloten wünschenswerte Steuerfolgsamkeit erfordert.

Entsprechend der Erfindung ist deshalb vorgesehen, das aus den Antriebsmomenten erzeugte Netto-Giermoment um einen zusätzlichen Giermoment-Anteil zu ergänzen. Hierzu sieht die Erfindung vor, dass bei einem seitlich sich gegenüberliegenden Paar von Hubluftschrauben die zugehörigen Drehachsen bzgl. der Hochachse gegensinnig zur Seite geneigt sind und sich in einem Schnittpunkt treffen. Dabei liegt bei einem vor dem Konstruktionsschwerpunkt liegenden Paar von Hubluftschrauben der genannte Schnittpunkt der zugehörigen Drehachsen vor dem Schnittpunkt der Drehachsen eines hinter dem Konstruktionsschwerpunkt liegenden Paares von Hubluftschrauben. Darüber hinaus ist noch vorgesehen, dass innerhalb eines Quadranten alle dort befindlichen Hubluftschrauben die gleiche Drehrichtung um ihre jeweilige Drehachse aufweisen. Vorteilhaft sind unter Beibehaltung des vorgenannten Konzeptes für eine Fail-Safe-Auslegung in jedem Quadranten mehrere und insbesondere zwei um ihre Drehachse drehend antreibbare Hubluftschrauben mit gleicher Drehrichtung vorgesehen, wobei die Schnittpunkte der Drehachsen der vor dem Konstruktionsschwerpunkt liegenden Paare von Hubluftschrauben vor den Schnittpunkten der Drehachsen der hinter den Konstruktionsschwerpunkt liegenden Paare von Hubluftschrauben liegen.

Durch die erfindungsgemäße Schrägstellung der Drehachsen bleibt das eingangserwähnte Konzept der Drehmomentensteuerung im Wesentlichen erhalten, wird jedoch noch um einen zusätzlichen Momentenanteil wie folgt ergänzt: Die Schrägstellung der Drehachsen bewirkt zunächst, dass der Schub einer jeden Hubluftschraube nicht nur vertikal nach oben, sondern auch anteilig nach außen von der Längsachse fortweisend wirkt. Falls nun ein paar von seitlich sich gegenüberliegenden, beispielsweise vor dem Konstruktionsschwerpunkt positionierten Luftschrauben mit unterschiedlicher Drehzahl betrieben wird, wird hierdurch bei gleichbleibendem mittlerem Auftrieb eine Netto-Seitenkraft erzeugt. Gleiches gilt für ein Paar von seitlich sich gegenüberliegenden Hubluftschrauben hinter dem Konstruktionsschwerpunkt, wobei jedoch in diesem Falle die entstehende Netto-Seitenkraft in die entgegengesetzte Seitenrichtung wirkt. Aufgrund der oben definierten Positionierung der Drehachsen-Schnittpunkte bilden die entgegengesetzt wirkenden Seitenkräfte ein zueinander beanstandetes Kräftepaar mit einem resultierenden Drehmoment um die Hochachse. Dieses resultierende Drehmoment addiert sich mit dem ohnehin vorhandenen, aus den unterschiedlichen Antriebsmomenten der Hubluftschrauben resultierenden Moment. Insgesamt steht damit ein deutlich erhöhtes Gesamtmoment um die Hochachse zur Verfügung, welches für eine saubere Giersteuerung selbst größerer und damit trägerer Fluggeräte insbesondere in einer manntragenden Dimension genutzt werden kann. In praktischen Flugversuchen hat sich gezeigt, dass durch das erfindungsgemäße Konzept der Achsenschrägstellung insgesamt eine Giermomenten-Bandbreite zur Verfügung steht, welche jenseits des Modellmaßstabes für die Steuerung eines größeren, trägeren und sogar manntragenden Fluggerätes ausreicht.

In einem weiteren Aspekt der Erfindung ist noch hervorzuheben, dass alle Hubluftschrauben in diagonal sich gegenüberliegenden Quadranten die gleiche Drehrichtung aufweisen. Alle Hubluftschrauben innerhalb eines Quadranten unterstützen sich gegenseitig und können beim Ausfall einer Luftschraubeneinheit als "fail safe" Konzept die Tragfähigkeit und Steuerbarkeit sicherstellen. Darüber hinaus wird die Steuerung des Fluggerätes um die verschiedenen Raumachsen (Gier-, Roll- und Nicksteuerung) entkoppelt: Alle Hubluftschrauben von zwei auf einer Diagonalen liegenden Quadranten können bei gleicher Drehrichtung mit erhöhtem Moment und Schub betrieben werden, während alle übrigen Hubluftschrauben der Quadranten auf der anderen Diagonalen bei gegensinniger, jedoch untereinander gleicher Drehrichtung mit entsprechend verringertem Moment und Schub betrieben werden. Hierdurch entsteht ein reines Giermoment ohne Änderung des Gesamtschubes bzw. des Gesamtauftriebes, und auch ohne ein resultierendes Roll- oder Nickmoment. Ein Roll- oder Nickmoment hingegen kann erzeugt werden, wenn alle Hubluftschrauben auf der gleichen Seite der Längs- oder Querachse mit erhöhtem Moment und Schub betrieben werden, während alle Hubluftschrauben auf der jeweils gegenüberliegenden Seite der Längs- oder Querachse mit verringertem Moment und Schub betrieben werden. Im Ergebnis entsteht ein Roll- oder Nickmoment mit der Folge einer Roll- oder Nickbewegung des Fluggerätes, während das Gesamtmoment um die Hochachse bei Null bleibt, ohne dass also eine Gierbewegung entsteht. Auch der Gesamtschub und damit der Gesamtauftrieb ändern sich nicht.

Es kann zweckmäßig sein, die Hubluftschrauben nach innen zu neigen. Bevorzugt sind jedoch alle Drehachsen nach außen geneigt, sodass also die Drehachsen in Hochrichtung oben einen größeren Abstand zur Längsmittelebene des Fluggerätes haben als weiter unten. Hierbei ist im bezogen auf die Vorwärtsrichtung vorderen rechten Quadranten und im hinteren linken Quadranten die Drehrichtung aller Hubluftschrauben gegen den Uhrzeigersinn. Im bezogen auf die Vorwärtsrichtung vorderen linken Quadranten und im hinteren rechten Quadranten ist die Drehrichtung aller Hubluftschrauben im Uhrzeigersinn. Hierdurch wird zum einen erreicht, dass sich die bei variierenden Drehzahlen entstehenden Momentanteile vorzeichenrichtig ergänzen. Zum anderen werden die Schnittlinien der Rotor-Drehebenen mit der Längsmittelebene des Fluggerätes soweit angehoben, dass sie oberhalb einer im Rumpf positionierten Piloten- bzw. Passagierzelle liegen. Dies stellt einen zulassungsrelevanten Sicherheitsaspekt dar.

Die Neigung der Drehachsen relativ zur Hochachse lässt sich durch einen Seitenwinkel angeben, welche vorteilhaft in einem Bereich von 3° bis 8° liegt und insbesondere 5° beträgt. Dies hat sich für die Erzielung der oben genannten Wirkungen ohne relevanten Verlust an vertikaler Hubkraft als zweckmäßig herausgestellt, was auch in Flugversuchen bestätigt werden konnte.

Alternativ oder ergänzend zum genannten Seitenwinkel kann auch eine Neigung der Drehachsen bezüglich der Hochachse um einen Nickwinkel nach vorne zweckmäßig sein, wobei der Nickwinkel in einem Bereich von 2° bis 5° liegt und insbesondere etwa 3,5° beträgt. Im Schwebeflug, wenn die Drehachsen der Hubluftschrauben naturgemäß etwa senkrecht stehen, ist hierdurch das Fluggerät mit seiner Längsachse leicht nach hinten geneigt, was vom Piloten bzw. von den Passagieren als nicht weiter störend empfunden wird. Sofern nun hieraus eine Beschleunigung des Fluggerätes nach vorne in Gang gesetzt werden soll, ist eine Neigung der Hubluftschrauben nach vorne erforderlich. Das Fluggerät wird hierfür aus seiner rückwärts geneigten Ruhelage nach vorne geneigt. Aufgrund des relativen Kippwinkels der Luftschrauben-Drehachsen stellt sich die gewünschte Drehachsen-Neigung bereits dann ein, wenn die Längsachse des Fluggerätes etwa horizontal liegt. Das Fluggerät beschleunigt demnach in Vorwärtsrichtung in etwa horizontal ausgerichteter Lage. Dies erleichtert die Transition in den aerodynamischen Reiseflug, da die Tragflächen im Vorwärtsflug zumindest näherungsweise mit dem gewünschten Anstellwinkel angeströmt werden. Umgekehrt führt die Beendigung des aerodynamischen Fluges in Folge der Fahrtverringerung und Anstellwinkelvergrößerung dazu, dass die Hubluftschrauben selbsttätig zumindest näherungsweise in ihre senkrechte Schwebeflugausrichtung gebracht werden, ohne dass sich ein erwünschter, das Abbremsen behindernder Vorwärtsschub seitens der Hubluftschrauben einstellt.

Die Hubluftschrauben bewegen sich in zugehörigen Drehkreisen. In vorteilhafter Weiterbildung sind die Hubluftschrauben derart angeordnet, dass in der Längsrichtung hintereinander liegende Drehkreise in Richtung der Drehachsen einen Höhenversatz zueinander aufweisen, wobei sich diese Drehkreise außerdem anteilig überlappen. Dies erlaubt den Einsatz von Hubluftschrauben mit vergleichsweise großem Durchmesser bei vergleichsweise geringer Drehzahl. Dies zieht bei hohem Wirkungsgrad einen vergleichsweise niedrigen Leistungsbedarf für den Schwebeflug nach sich. Die Wirtschaftlichkeit und insbesondere die Eignung für den elektromotorischen Antrieb sind verbessert.

Die Hubluftschrauben weisen jeweils insbesondere zwei Luftschraubenblätter auf, wobei die Luftschraubenblätter zweckmäßig bezüglich der Drehachsen in einem Konuswinkel angeordnet sind, und wobei der Konuswinkel kleiner als 180° ist. Fliehkräfte und Auftriebskräfte, welche an den Luftschraubenblättern wirken, heben sich auf diese Weise zumindest soweit auf, dass eine im Wesentlichen radiale Belastung unter Vermeidung von Biegemomenten eintritt. Dementsprechend können die Hubluftschrauben dünn und leicht ausgeführt sein. Trotzdem ist die Verformung unter Last gering, sodass eine enge Staffelung ohne Kollisionsrisiko möglich ist. Der Konuswinkel erhöht zudem den Freiraum der Hubluftschrauben zu den Längsträgern und den Tragflügelenden.

Gemäß der Erfindung ist das Fluggerät als Tandemflügler mit einem vorderen Paar von Tragflächen und einem hinteren Paar von Tragflächen ausgebildet, wobei das vordere Paar von Tragflächen und das hintere Paar von Tragflächen eine im Wesentlichen gleiche Spannweite aufweisen. Die Tragflügelenden der vorderen Tragflächen sind mit zugeordneten Tragflügelenden der hinteren Tragflächen jeweils mittels eines Längsträgers miteinander verbunden, wobei die Hubluftschrauben insbesondere einschließlich ihrer Hubmotoren an den Längsträgern gelagert sind.

Die genannte Konfiguration lässt eine Positionierung der Hubluftschrauben in Längsrichtung unabhängig von der tatsächlichen Position der Tragflügelenden zu, sodass ein gemeinsamer Auftriebsmittelpunkt aller Hubluftschrauben zumindest in die Nähe des Konstruktionsschwerpunktes des Fluggerätes gebracht werden kann. Dies hat zur Folge, dass im Schwebeflug alle Hubluftschrauben zumindest näherungsweise gleich belastet werden. Alle Hubmotoren behalten im stationären Schwebeflug ihre Regelreserven, ohne dass diese durch stetes Aussteuern eines außermittigen Schwerpunktes in Anspruch genommen werden müssten. Der Konstruktionsschwerpunkt liegt seinerseits mit ausreichendem Abstand vor dem aerodynamischen Neutralpunkt, sodass ein stabiler aerodynamischer Geradeausflug möglich ist. Für den aerodynamischen Geradeausflug und für den Schwebeflug gelten zumindest näherungsweise die gleichen Trimmbedingungen, sodass die Transition zwischen beiden Flugzuständen ohne eine größere Trimmänderung möglich ist. Die Längsträger bilden außerdem zusammen mit den Tragflächen einen Rahmen, welcher die tragende Struktur insbesondere hinsichtlich Torsion aussteift.

In vorteilhafter Weiterbildung des genannten Tandemflüglerkonzeptes weist das vordere Paar von Tragflächen eine erste mittlere Flügeltiefe auf, während das hintere Paar von Tragflächen eine zweite mittlere Flügeltiefe aufweist, wobei die erste mittlere Flügeltiefe in einen Bereich von 30% bis 40% der zweiten mittleren Flügeltiefe liegt. Diese Verteilung der mittleren Flügeltiefen erlaubt es, den aerodynamischen Neutralpunkt und den mit ausreichendem Sicherheitsabstand davor positionierten Konstruktionsschwerpunkt etwa in das geometrische Zentrum des Fluggerätes zu legen. Der Konstruktionsschwerpunkt und der Gesamtauftriebsmittelpunkt aller Hubluftschrauben kann auf diese Weise gut in Überdeckung gebracht werden.

In einer zweckmäßigen Ausführungsform liegt das vordere Paar von Tragflächen in Richtung der Hochachse höher als das hintere Paar von Tragflächen. Hierdurch ist sichergestellt, dass das hintere Paar von Tragflächen im langsamen Flug bei hohem Anstellwinkel und selbst im überzogenen Zustand niemals in eine eventuell sich bildende Wirbelschleppe des vorderen Paars von Tragflächen gerät. Damit ist ein Abfangen allein mit aerodynamischen Mitteln und ohne Einsatz des Hubantriebes immer möglich.

Für die aerodynamische Steuerung kommen verschiedene konventionelle Mittel beispielsweise mit Seiten-, Höhen- und Querrudern in Betracht. Bevorzugt ist das Fluggerät für eine aerodynamische Nick- und Rollsteuerung mit sog. Elevons versehen, welche insbesondere am hinteren Paar von Tragflächen angeordnet sind. Hierbei sind Höhenruder und Querruder in einzelnen Steuerflächen zusammengefasst. Eine Aufteilung der Steuerflächen in Spannweitenrichtung ist nicht erforderlich. Damit stehen selbst bei geringerer Spannweite ausreichend große Steuerflächen mit entsprechender Steuerwirkung zur Verfügung. Insgesamt ergibt sich eine saubere aerodynamische Auslegung mit wenigen unerwünschten Spalten bei einfacher kinematischer Ansteuerbarkeit. Die Elevons werden in konventioneller Weise mittels eines Steuerknüppels derart bewegt bzw. angesteuert, dass ein Ziehen bzw. Drücken am Steuerknüppel zu einem gleichsinnigen Höhenruderausschlag und eine seitliche Steuerknüppel-Bewegung zum einem gegensinnigen Querruderausschlag der Elevons führt. Hierzu sind bevorzugt zwei unmittelbar an den Steuerknüppel angrenzende Schubstangen V-förmig angeordnet und über Umlenkhebel sowie weitere Übertragungselemente insbesondere in Form von Bowdenzügen jeweils mit je einem Elevon in Wirkverbindung gesetzt. Ohne kinematischen Zusatzaufwand wirkt die V-Form als mechanischer bzw. kinematischer Mischer, welcher ein Ziehen bzw. ein Drücken des Steuerknüppels in eine gleichsinnig ausschlagende Höhensteuerbewegung und eine Links-Rechts-Bewegung des Steuerknüppels in einen gegensinnigen Querruderausschlag der Elevons umsetzt. Durch Anpassung der Umlenkwinkel lässt sich zudem ohne Zusatzaufwand eine Differenzierung der Elevon-Ausschläge zur Minderung oder sogar Beseitigung des Wende-Roll-Momentes erzielen.

In einer bevorzugten Ausführungsform sind die Elevons mit Spades versehen. Aufgrund ihrer Größe können die Elevons nämlich insbesondere im Schnellflug zu hohen Steuerkräften führen, welche für eine reine Handsteuerung ggf. zu reduzieren sind. Als vor der Drehachse der Elevons angeordnete Ausgleichsflächen verringern die Elevons die erforderlichen Handkräfte zur Erzeugung eines Querruder- und auch eines Höhenruderausschlages. Außerdem hat sich gezeigt, dass die Elevons im aerodynamischen Flug aufgrund der wirkenden Luftkräfte dazu neigen, in Richtung eines gemeinsamen, gleichsinnigen Höhenruderausschlages aus ihrer konstruktiv vorgegeben Neutralposition nach oben auszuwandern. Um in dieser Hinsicht nicht dauerhaft gegensteuern zu müssen, sind die Spades vorteilhaft derart getrimmt, dass die Elevons im aerodynamischen Flug eine bzgl. der Nicksteuerung im Wesentlichen neutrale Trimmposition einnehmen. Die solcherart eingestellten Elevons bewirken die Einstellung eines im stationären Flug handkraftfreien Höhenrudertrimms, sodass ein dauerhaftes Gegensteuern entfällt. In einem weiteren Aspekt wirken die Spades gegen Flattern. Schließlich können insbesondere in Verbindung mit den Spades Ausgleichsgewichte angebracht und derart positioniert werden, dass ein möglichst vollständiger Massenausgleich der Elevons herbeigeführt wird. Auch dies wirkt gegen Flattern. Im Übrigen erzeugen die Ausgleichsgewichte neutrale Rudermomente schon beim Start mit fehlender oder geringer Anströmung, sodass die Elevons ohne Handkraft in ihre neutrale Position gebracht und dort gehalten werden können.

Ein Ausführungsbeispiel der Erfindung ist nachfolgend anhand der Zeichnung näher beschrieben. Es zeigen:
- Fig.1: in einer perspektivischen Ansicht ein erfindungsgemäß ausgeführtes Fluggerät mit vorderen und hinteren Tragflügeln für einen aerodynamischen Flug sowie mit Hubluftschrauben zur Bildung eines Schwebeantriebs,
- Fig. 2: in einer Draufsicht das Fluggerät nach Fig. 1 mit Einzelheiten zur Positionierung der vorderen und hinteren Tragflächen und der Hubluftschrauben relativ zu einem Konstruktionsschwerpunkt,
- Fig. 3: in einer Frontansicht das Fluggerät nach den Fig. 1 und 2 mit Einzelheiten zur Höhenstaffelung der Tragflächen sowie zur seitlichen Neigung der Hubluftschrauben,
- Fig. 4: in einer Seitenansicht das Fluggerät nach den Fig. 1 bis 3 mit Einzelheiten zu einem Kippwinkel der Hubluftschrauben und zur Relativpositionierung der Drehachsenschnittpunkte,
- Fig. 5: in einer Querschnittsdarstellung eine der hinteren Tragflächen mit einem Elevon für die aerodynamische Roll- und Nicksteuerung sowie mit einem am Elevon montierten Spade, und
- Fig. 6: in einer perspektivischen Detailansicht Einzelheiten einer Steuermechanik zur Ansteuerung der Elevons nach den Fig. 1, 2 und 5.

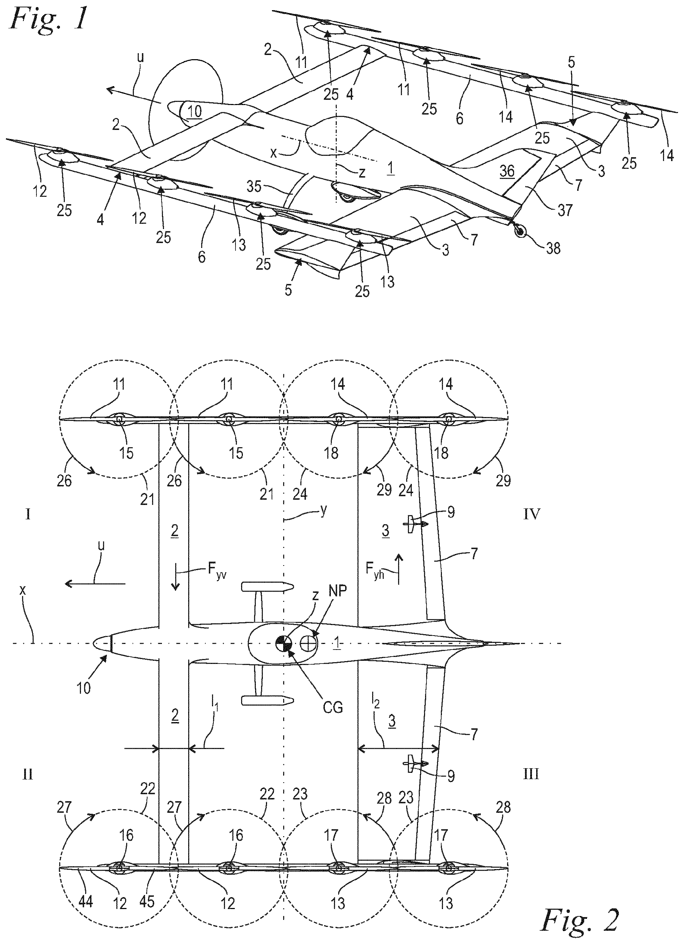

Fig. 1 zeigt in einer perspektivischen Ansicht ein erfindungsgemäß ausgeführtes, im vorliegenden Fall einsitziges, manntragendes Fluggerät. Das Fluggerät weist einen Rumpf 1 mit einer etwa mittigen Kabinenhaube auf, welche das Cockpit eines einzelnen Piloten abdeckt und dabei den Piloten eine freie Sicht ermöglicht. Es kann aber auch eine zwei- oder mehrsitzige Version oder aber auch eine unbemannte Version zweckmäßig sein. Der Rumpf 1 ist als Aramid-Sandwich-Sicherheitszelle ausgebildet. Die übrigen Strukturbauteile des Fluggerätes bestehen vorrangig aus Kohlefaser-Laminat.

Vom Rumpf 1 aus erstrecken sich seitlich ein vorderes Paar von Tragflächen 2 sowie ein hinteres Paar von Tragflächen 3. Bei einem aerodynamischen Flug des Fluggerätes in einer Vorwärtsrichtung u, welche im Wesentlichen einer Längsachse x des Fluggerätes entspricht, liefern die vorderen Tragflächen 2 und die hinteren Tragflächen 3 aufgrund ihrer Umströmung mit Luft den erforderlichen Auftrieb. Der Vortrieb in der Vorwärtsrichtung u wird durch einen nicht näher dargestellten elektrischen Flugantrieb 10 in Form eines Motors mit einer Luftschraube bereitgestellt, wovon hier zur besseren Übersicht nur ein angedeuteter Propellerkreis zu sehen ist. Außerdem weist das Fluggerät einen elektrischen Schwebeantrieb für einen Schwebeflug auf, welcher hauptsächlich in Richtung einer Hochachse z des Fluggerätes wirkt. Teil des Schwebeantriebs sind verschiedene Hubluftschrauben 11, 12, 13, 14, welche um ihre jeweiligen Drehachsen drehend antreibbar sind. Im gezeigten Ausführungsbeispiel weist hierfür jede Hubluftschraube 11, 12, 13, 14 je einen eigenen Hubmotor 25 auf. Es kann aber auch ein zentraler Antrieb bzw. ein zentraler Motor in Betracht kommen. Die Hubmotoren 25 sind hier der Einfachheit halber nur in Form ihrer aerodynamischen Verkleidung erkennbar. Die Hubmotoren 25 sowie der Motor des Flugantriebes 10 sind Elektromotoren, welche für einen erstklassigen Wirkungsgrad mit Magneten in der Konfiguration eines Halbach-Arrays ausgestattet sind, und welche über eigens entwickelte, angepasste Sinusimpuls-Leistungssteller aus im Fluggerät mitgeführten, nicht dargestellten elektrischen Batterien mit Energie gespeist werden. Insgesamt ist damit ein Fluggerät gebildet, welches einerseits mittels seines Schwebeantriebs einen Schwebeflug und andererseits mittels seiner Tragflächen 2, 3 und des Flugantriebes 10 einen aerodynamischen Flug ausführen kann.

Am bezogen auf die Vorwärtsrichtung u hinteren Ende des Rumpfes 1 ist ein konventionelles Seitenleitwerk 36 mit einem Seitenruder 37 angebracht, wodurch im aerodynamischen Vorwärtsflug eine Stabilisierung und auch eine Giersteuerung um die Hochachse z erzielt wird. Im Bereich ihrer Hinterkanten sind die hinteren Tragflächen 3 mit je einem sogenannten Elevon 7 als aerodynamische Steuerklappen versehen. Die Steuerklappen bzw. Elevons 7 können aber alternativ oder zusätzlich auch an den vorderen Tragflächen 2 angeordnet sein. Die Elevons 7 erstrecken sich ungeteilt über die gesamte Halbspannweite der jeweiligen hinteren Tragfläche 3. Der Begriff "Elevon" setzt sich zusammen aus "elevator" für Höhenruder und "aileron" für Querruder, und bezeichnet aerodynamische Steuerflächen für eine kombinierte aerodynamische Nick- und Rollsteuerung.

Für Start, Landung und für Rollbewegungen auf dem Boden ist das Fluggerät mit einem Radfahrwerk versehen, welches hier als klassisches Zweibein-Fahrwerk mit einem zusätzlichen hinteren Spornrad 38 ausgestaltet ist. Es können aber auch andere Fahrwerksanordnungen zweckmäßig sein. Jedenfalls erlaubt das Fahrwerk Start und Landung im rein aerodynamischen Flugbetrieb bei entsprechender Vorwärtsfahrt unter Nutzung des Auftriebes der vorderen und hinteren Tragflächen 2, 3. Sofern auf die Option eines aerodynamischen Startens bzw. Landens verzichtet werden soll, kann das Fahrwerk auch durch ein geeignetes Gestell oder durch Kufen nach dem Vorbild eines Hubschraubers ersetzt werden.

Fig. 2 zeigt in einer Draufsicht das Fluggerät nach Fig. 1 mit weiteren Einzelheiten. Das Fluggerät erstreckt sich entlang der schon erwähnten Längsachse x, welche auch im Wesentlichen, d. h. abgesehen von Variationen im Anstellwinkel und im Gierwinkel die Vorwärtsrichtung u vorgibt. Quer zur Längsachse x verläuft im rechten Winkel eine Querachse y, welche die Spannweitenrichtung der vorderen und hinteren Tragflächen 2, 3 vorgibt. Durch den Kreuzungspunkt der Längsachse x mit der Querachse y verläuft noch im rechten Winkel zu beiden die Hochachse z. Das Fluggerät weist einen Konstruktionsschwerpunkt CG auf, wobei hier der Koordinatenursprung der Längsachse x, der Querachse y und der Hochachse z in den Konstruktionsschwerpunkt CG gelegt ist. Ausgehend vom Konstruktionsschwerpunkt CG kann das Fluggerät einen tatsächlichen Schwerpunkt haben, der innerhalb eines zulässigen Bereichs ein begrenztes Maß vor oder hinter den Konstruktionsschwerpunkt CG liegt. Der Pilot sitzt nahezu exakt im Konstruktionsschwerpunkt CG, sodass verschiedene Piloten mit unterschiedlichem Gewicht keinen Einfluss auf die tatsächliche Schwerpunktlage haben. Variationen des tatsächlichen Schwerpunktes sind im aktiven Betrieb im Wesentlichen von zusätzlich mitgeführter Last (payload, Gepäck) bestimmt. Natürlich ist es im Rahmen der Erfindung aber auch möglich, dass Pilot und eventuelle Passagiere nicht unmittelbar im Konstruktionsschwerpunkt CG positioniert sind, sodass Änderungen im Beladungszustand auch zu Variationen der tatsächlichen Schwerpunktlage führen können. In einem solchen Fall muss sichergestellt werden, dass der tatsächliche Schwerpunkt innerhalb eines zulässigen Bereichs liegt.

Die vorderen Tragflächen 2 und die hinteren Tragflächen 3 haben die gleiche Spannweite in Richtung der Querachse y, unterscheiden sich jedoch hinsichtlich ihrer Flügeltiefe. Das vordere Paar von Tragflächen 2 weist eine erste mittlere Flügeltiefe l₁ auf, während das hintere Paar von Tragflächen eine zweite mittlere Flügeltiefe l₂ aufweist. Im gezeigten bevorzugten Ausführungsbeispiel beträgt die erste mittlere Flügeltiefe l₁ nur etwas 30% bis 40% der zweiten mittleren Flügeltiefe l₂. Hiermit und mit Verbindung mit den übrigen aerodynamischen Kenngrößen der vorderen und hinteren Tragflächen 2, 3 wie Einstellwinkeldifferenz, Momentenbeiwerte der gewählten Tragflächenprofile und dergleichen wird eine Lage des aerodynamischen Neutralpunktes NP mit ausreichendem Abstand hinter dem Konstruktionsschwerpunkt CG erreicht, sodass im aerodynamischen Flug immer ein ausreichendes Stabilitätsmaß bei ausreichender Steuerbarkeit um die Querachse y zur Verfügung steht.

Zusätzlich zu den vorgenannten Details zur aerodynamischen bzw. flugmechanischen Auslegung sind auch Details für die Auslegung des Schwebeantriebs von Bedeutung. Hierzu ist in der Draufsicht nach Fig. 2 erkennbar, dass die Längsachse x und die Querachse y in der von ihnen aufgespannten Ebene vier Quadranten I, II, III, IV des Fluggerätes voneinander abgrenzen. In jedem dieser Quadranten weist der Schwebeantrieb mindestens je eine um eine zugehörige Drehachse 15, 16, 17, 18 drehend antreibbare Hubluftschraube 11, 12, 13, 14 auf. Im gezeigten bevorzugten Ausführungsbeispiel sind in jedem Quadranten I, II, III, IV jeweils mehrere und hier genau zwei um ihre jeweilige Drehachse 15, 16, 17, 18 gleichsinnig drehend antreibbare Hubluftschrauben 11, 12, 13,14 in Fail-safe-Konfiguration vorgesehen. Bezogen auf die Längsrichtung 8 legen sich die jeweiligen Hubluftschrauben 11, 12, 13, 14 paarweise seitlich gegenüber. Mit anderen Worten liegt jeder einzelnen Hubluftschraube 11 des ersten Quadranten I je eine Hubluftschraube 12 des zweiten Quadranten II gegenüber, während jeder Hubluftschraube 13 des dritten Quadranten III je eine Hubluftschraube 14 des vierten Quadranten IV gegenüberliegt. Alle innerhalb des ersten, bezogen auf die Vorwärtsrichtung u vorderen rechten Quadranten I befindlichen Hubluftschrauben 11 haben die gleiche Drehrichtung, und zwar von oben betrachtet entsprechend einem Pfeil 26 gegen den Uhrzeigersinn. Das gleiche gilt auch für alle Hubluftschrauben 13, die sich im dritten, bezogen auf die Vorwärtsrichtung u hinteren linken Quadranten III befinden. Alle im zweiten, bezogen auf die Vorwärtsrichtung u vorderen linken Quadranten II befindlichen Hubluftschrauben 12 drehen in die entgegengesetzte Richtung, d. h. in der Draufsicht von oben entsprechend einem Pfeil 27 im Uhrzeigersinn. Das gleiche gilt auch für alle im vierten, bezogen auf die Vorwärtsrichtung u hinteren rechten Quadranten IV befindlichen Hubluftschrauben 14. Mit anderen Worten haben alle in den diagonal sich gegenüberliegenden Quadranten I, III befindlichen Hubluftschrauben 11, 13 den gleichen Drehsinn gegen den Uhrzeigersinn, während alle in den diagonal sich gegenüberliegenden Quadranten II, IV befindlichen Hubluftschrauben 12, 14 den gleichen Drehsinn im Uhrzeigersinn haben.

Die Hubluftschrauben 11, 12, 13, 14 weisen jeweils zwei Luftschraubenblätter 44, 45 auf, wobei auch eine andere Anzahl von Luftschraubenblättern zweckmäßig sein kann. Sie sind sogenannte "fixed pitch" Luftschrauben mit festgelegter Steigung. Hieraus folgt, dass ihr Schub allein über die Drehzahl eingestellt wird. Die Hubluftschrauben 11, 12, 13, 14 unterscheiden sich lediglich in ihrer Anpassung an die jeweilige Drehrichtung und sind ansonsten insbesondere hinsichtlich Durchmesser und Steigung untereinander gleich. Auch die Hubmotoren 25 Fig. 1 und damit die verfügbare Antriebsleistung aller Hubluftschrauben 11, 12, 13, 14 sind gleich.

Die Hubluftschrauben 11, 12, 13, 14 sind in der gezeigten Draufsicht spiegelsymmetrisch sowohl zur Längsachse x als auch zur Querachse y positioniert, sodass ihr geometrischer Mittelpunkt im Kreuzungspunkt der Längsachse x mit der Querachse y und damit im Konstruktionsschwerpunkt CG liegt. Bei auf gleiches Maß eingeregelter Antriebsleistung aller Hubluftschrauben 11, 12, 13, 14 befindet sich damit ihr gemeinsamer Schubmittelpunkt in Überdeckung mit dem Konstruktionsschwerpunkt CG. Der Gesamtschub aller Hubluftschrauben 11, 12, 13, 14 hält das Fluggerät im Schwebeflug in der Luft, wobei im beschriebenen Ausgangszustand ein Momentengleichgewicht um die Längsachse x, die Querachse y und die Hochachse z herrscht. In der Folge führt das Fluggerät keinerlei Nick-, Roll- oder Gierbewegung aus.

Hiervon ausgehend erfolgt eine Steuerung bzw. die Erzeugung einer Rollbewegung um die Längsachse x, indem die Hubluftschrauben 11, 14 auf einer Seite der Längsachse x mit einer Drehzahl betrieben werden, die von der Drehzahl der Hubluftschrauben 12, 13 auf der gegenüberliegenden Seite der Längsachse x abweicht. Diese Drehzahldifferenz kann derart eingestellt werden, dass der Gesamtschub und damit die Hubkraft gleichbleibt, während ein Rollmoment um die Längsachse x entsteht. Wegen der entgegengesetzten Drehrichtungen einerseits der Hubluftschrauben 11, 13 im ersten und im diagonal gegenüberliegenden dritten Quadranten I, III und andererseits der Hubluftschrauben 12, 14 im zweiten und im diagonal gegenüberliegenden vierten Quadranten II, IV entsteht außerdem trotz der Drehzahländerungen kein resultierendes Gesamtmoment um die Hochachse z, sodass praktisch keine Kopplung der Rollsteuerung mit der Giersteuerung besteht. Sinngemäß das Gleiche gilt für eine Steuerung bzw. die Erzeugung einer Nickbewegung um die Querachse y, indem die Hubluftschrauben 11, 12 auf einer Seite der Querachse y mit einer Drehzahl betrieben werden, die von der Drehzahl der Hubluftschrauben 13, 14 auf der gegenüberliegenden Seite der Querachse y abweicht.

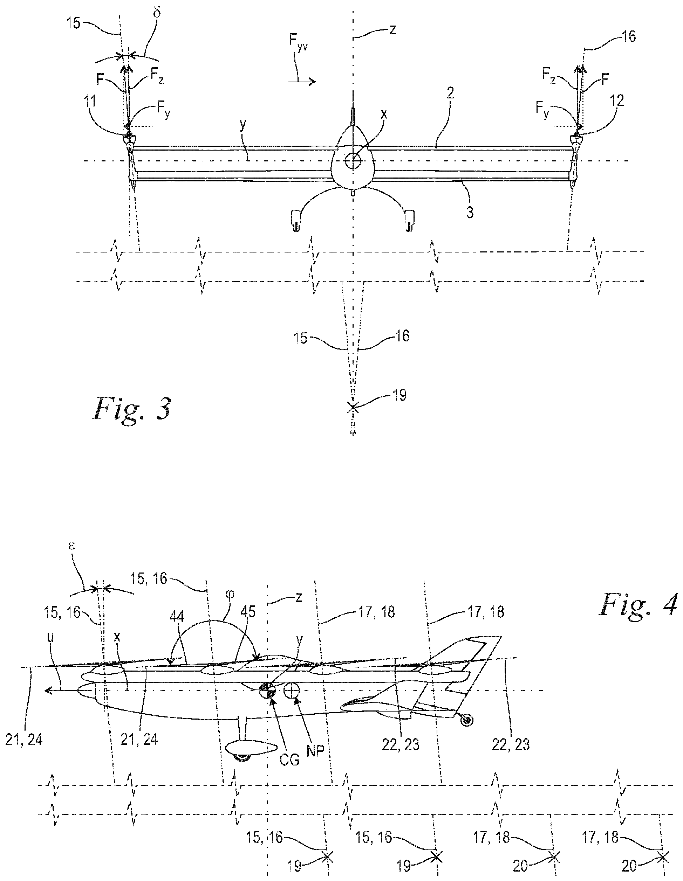

Eine Steuerung bzw. die Erzeugung einer Gierbewegung um die Hochachse z erfolgt anteilig, indem einerseits der Hubluftschrauben 11, 13 im ersten und im diagonal gegenüberliegenden dritten Quadranten I, III und andererseits der Hubluftschrauben 12, 14 im zweiten und im diagonal gegenüberliegenden vierten Quadranten II, IV mit unterschiedlichen Antriebsmomenten betrieben werden. Die unterschiedlichen Antriebsmomente der linksdrehenden Hubluftschrauben 11, 13 und der rechtsdrehenden Hubluftschrauben 12, 14 erzeugt ein Netto-Gesamtmoment um die Hochachse z im Sinne eines Giermomentes, welches zu einer Gierbewegung führt. Dieses bei Nutzung des Schwebeantriebes abrufbare Netto-Gesamtmoment wird gemäß der Erfindung noch um einen weiteren Momentenanteil ergänzt, der sich aus einer in Fig. 2 eingetragenen vorderen Seitenkraft F_{yv} und einer hinteren Seitenkraft F_{yh} ergibt. Das Gesamt-Giermoment um die Hochachse z auf diese Weise eingestellt werden, ohne dass sich Änderungen im Gesamtauftrieb oder unerwünschte Roll- bzw. Nickmomente einstellen. Einzelheiten hierzu werden weiter unten im Zusammenhang mit Fig. 3 beschrieben.

Aus der Zusammenschau der Fig. 1 und 2 wird noch deutlich, dass sich die Hubluftschrauben 11, 12, 13, 14 mit ihren Drehachsen 15, 16, 17, 18 und mit ihren Hubmotoren 25 nicht unmittelbar an äußeren Tragflügelenden 4, 5 der Tragflächen 2, 3 befinden. Vielmehr sind die Tragflügelenden 4 der vorderen Tragflächen 2 mit den auf gleicher Seite zugeordneten Tragflügelenden 5 der hinteren Tragflächen 3 jeweils mittels eines etwa parallel zur Längsachse x verlaufenden Längsträgers 6 verbunden. Die Längsträger 6 dienen der Aufnahme der Hubmotoren 25 sowie der Lagerung der Hubluftschrauben 11, 12, 13, 14 für einen drehenden Antrieb um ihre jeweiligen Drehachsen 15, 16, 17, 18, und erlauben eine Positionierung derselben abgekoppelt von der tatsächlichen Position der Tragflügelenden 4, 5. Im Übrigen bilden sie zusammen mit den Tragflächen 2, 3 einen im Wesentlichen rechteckigen Rahmen, welcher zur Torsionssteifigkeit der gesamten Struktur beiträgt.

Fig. 3 zeigt in einer Frontansicht das Fluggerät nach den Fig. 1 und 2. Hier sowie in der Seitenansicht nach Fig. 4 ist zunächst erkennbar, dass bei horizontaler Längsachse x das vordere Paar von Tragflächen 2 in Richtung der Hochachse z höher liegt als das hintere Paar von Tragflächen 3. Damit wird vermieden, dass eine eventuell von den vorderen Tragflächen 2 erzeugte Wirbelschleppe auf die hinteren Tragflächen 3 trifft.

Des Weiteren ergibt sich aus der Fig. 3, dass das seitlich sich gegenüberliegende Paar von vorderen Hubluftschrauben 11, 12 mit den zugehörigen Drehachsen 15, 16 bezüglich der Hochachse z gegensinnig um einen Seitenwinkel δ zur Seite geneigt ist. Beide Drehachsen 15, 16 sind um den gleichen Betrag des Seitenwinkels δ nach oben-außen weisend geneigt, wobei der Betrag des Seitenwinkels δ bevorzugt in einem Bereich von 3° bis 8° liegt und im gezeigten Ausführungsbeispiel etwa 5° beträgt. Diese seitliche Neigung führt dazu, dass sich die Drehachsen 15, 16 mittig unterhalb des Fluggerätes treffen bzw. kreuzen. Das gleiche gilt auch für alle übrigen Paare von Hubluftschrauben 11, 12 und Hubluftschrauben 13, 14 Fig. 2.

Fig. 4 zeigt in einer Seitenansicht das Fluggerät nach den Fig. 1 bis 3 in Reiseflugausrichtung, bei der die Längsachse x etwa horizontal und im Wesentlichen in Überdeckung mit der Vorwärtsrichtung u liegt. Bei langsamerer Fluggeschwindigkeit und damit einhergehendem höheren Anstellwinkel kann die Nase des Fluggerätes leicht nach oben zeigen, sodass die Längsachse x um einige Grad über der Vorwärtsrichtung u angestellt ist. Umgekehrt kann sich im Schnellflug eine leichte negative Anstellung der Längsachse x gegenüber der Vorwärtsrichtung u ergeben. Jedenfalls ist erkennbar, dass die Drehachsen 15, 16, 17, 18 der Hubluftschrauben 11, 12, 13, 14 (Fig. 2) bezüglich der Hochachse z um einen Kippwinkel ε nach vorne geneigt sind. Der Nickwinkel ε liegt vorteilhaft in einem Bereich von 2° bis 5° und beträgt im gezeigten Ausführungsbeispiel etwa 3,5°. Außerdem ergibt sich aus der Zusammenschau der Figuren 2 und 4, dass sich in die Hubluftschrauben 11, 12, 13, 14, genauer gesagt dass sich die Blattspitzen ihrer Luftschraubenblätter 44, 45 in zugehörigen Drehkreisen 21, 22, 23, 24 bewegen. In Richtung der Längsachse x hintereinanderliegende Drehkreise 21, 24 und Drehkreise 22, 23 weisen in Richtung ihrer Drehachsen 15, 16, 17, 18 einen Höhenversatz gegeneinander auf, und überlappen einander anteilig. Trotz der Überlappung vermeidet der Höhenversatz eine Kollision der Hubluftschrauben 11, 12, 13, 14. Außerdem sind die Luftschraubenblätter 44, 45 bezüglich der Drehachsen 15, 16, 17, 18 in einem Konuswinkel φ angeordnet sind, und wobei der Konuswinkel φ kleiner als 180° ist. Mit anderen Worten stehen die Luftschraubenblätter 44, 45 also leicht nach oben. Der Konuswinkel φ verringert die an den Luftschraubenblätter 44, 45 wirkenden Lasten und Verformungen, und sorgt für einen ausreichenden Freiraum gegenüber den Längsträgern 6 und den Tragflügelenden 4, 5 der Tragflächen 2, 3.

Der Zusammenschau der Fig. 3 und 4 ist entnehmbar, dass sich die Drehachsen 15, 16 der vorderen Hubluftschrauben 11, 12 in vorderen Schnittpunkten 19 schneiden, während sich die Drehachsen 17, 18 der hinteren Hubluftschrauben 13, 14 analog dazu in hinteren Schnittpunkten 20 schneiden. Der Seitenansicht nach Fig. 4 ist entnehmbar, dass die vorderen Schnittpunkte 19 der zugehörigen vorderen Drehachsen 15, 16 vor den hinteren Schnittpunkten 20 der hinteren Drehachsen 17, 18 liegen. Dies erlaubt eine Ergänzung der oben beschriebenen Giersteuerung des Fluggerätes um die Hochachse z wie folgt:
Zunächst ist in Fig. 3 erkennbar, dass die beiden seitlich sich gegenüberliegenden Hubluftschrauben 11, 12 bei gleicher Drehzahl eine gleiche, schräg nach außen-oben gerichtete Kraft F erzeugen. Aufgrund der Schrägstellung der Drehachsen 15, 16 um den Seitenwinkel δ lassen sich diese Kräfte F in vertikale Kraftkomponenten F_{z} und in horizontale Kraftkomponenten F_{y} zerlegen. Da beide horizontalen Kraftkomponenten F_{y} gleich groß und entgegengesetzt gerichtet sind, heben sie sich im Ausgangszustand zu Null auf.

Von dem genannten Ausgangszustand ausgehend werden für eine Giersteuerung die Hubluftschrauben 11, 13 des ersten und des dritten Quadranten I, III mit einer Drehzahl betrieben, die von der Drehzahl der Hubluftschrauben 12, 14 des zweiten und des vierten Quadranten II, IV abweicht. Die seitliche Neigung der vorderen Drehachsen 15, 16 um den Seitenwinkel δ (Fig. 3) führt dazu, dass zwar die Summe der vertikale Kraftkomponenten F_{z} und damit der Gesamtauftrieb gleich bleibt, dass aber die beiden horizontalen Kraftkomponenten F_{y} nicht mehr gleich groß sind, und sich also nicht mehr gegenseitig zu Null aufheben. Vielmehr erzeugen die vorderen, mit unterschiedlicher Drehzahl betriebenen Hubluftschrauben 11, 12 eine resultierende vordere Seitenkraft F_{yv}. Die hinteren, hier in Fig. 3 nicht gezeigten, aber ebenfalls mit unterschiedlicher Drehzahl betriebenen Hubluftschrauben 13, 14 erzeugen in analoger Weise eine resultierende hintere Seitenkraft F_{yh}, welche zusammen mit der vorderen Seitenkraft F_{yv} in Fig. 2 eingetragen ist und entgegengesetzt zur vorderen Seitenkraft F_{yv} wirkt. Der zuvor schon erwähnte Abstand zwischen den vorderen Schnittpunkten 19 und den hinteren Schnittpunkten 20 setzt diese beiden entgegengesetzt wirkenden horizontalen Seitenkräfte F_{yh}, F_{yv} in ein Giermoment um die Hochachse z um. Dieses aus den horizontalen Seitenkräften F_{yh}, F_{yv} resultierende Giermoment addiert sich zu der weiter oben beschriebenen Summe aller um die Drehachsen 15, 16, 17, 18 wirkenden Antriebsmomente, welche sich wegen der unterschiedlichen Last nicht mehr zu Null aufheben. Das entstehende Gesamtmoment kann bei Nutzung des Schwebeantriebs für eine Giersteuerung um die Hochachse z genutzt werden.

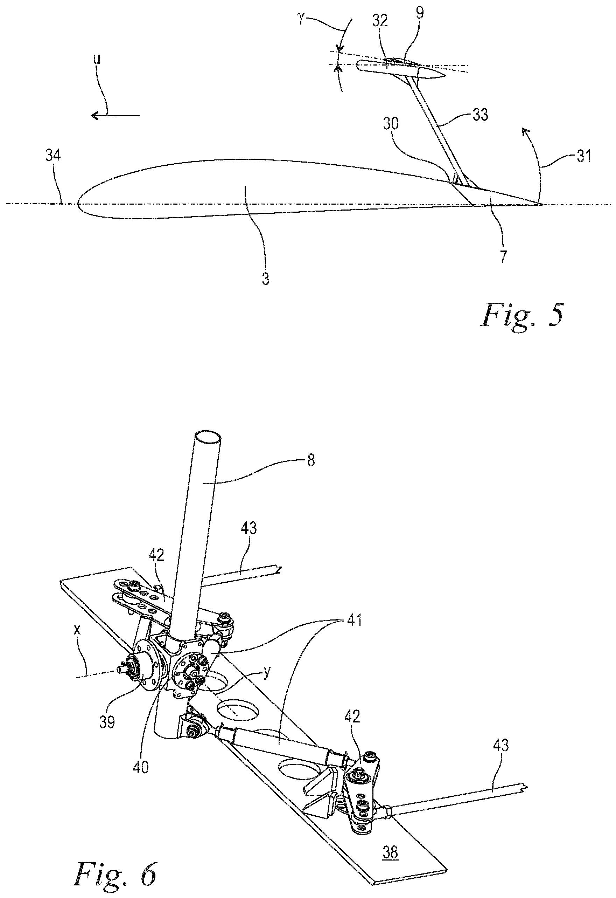

In der Draufsicht nach Fig. 2 ist noch erkennbar, dass die Elevons 7 mit je einem sogenannten Spade 9 versehen sind. Als "Spade" bezeichnet man eine aerodynamische Ausgleichsfläche, die mittels eines Kragarmes an einer aerodynamischen Steuerklappe derart befestigt ist, dass sie vor der Gelenkachse der Steuerklappe liegt und dadurch die bei einem Steuerausschlag erzeugten Klappenmomente und in der Folge die zur Betätigung aufzubringenden Handkräfte reduziert. Fig. 5 zeigt in einer Querschnittsdarstellung eine der hinteren Tragflächen 3 im Bereich eines solchen Spades 9. Von der hinteren Tragfläche 3 ist hier im Querschnitt das aerodynamische Profil erkennbar, welches sich entlang einer Profilsehne 34 erstreckt. Im vorderen Teil des Profils ist die Tragfläche 3 feststehend. Im hinteren Teil ist sie als aerodynamische Steuerklappe in Form eines Elevons 7 ausgebildet, wobei das Elevon 7 über Scharniere gelenkig am feststehenden Teil befestigt und um eine senkrechte zur Zeichnungsebene stehende Gelenkachse 30 schwenkbar gelagert ist.

Am Elevon 7 ist ein Hebelarm 33 befestigt, welcher sich ausgehend vom Elevon 7 nach oben und bezogen auf die Vorwärtsrichtung u nach vorne bis vor die Gelenkachse 30 erstreckt. An diesem äußeren, freien Ende des Hebelarms 33 ist ein Spade 9 sowie in unmittelbarer Nähe davon eine Ausgleichsmasse 32 befestigt. Die bezogen auf die Vorwärtsrichtung u vor der Gelenkachse 30 positionierte Ausgleichsmasse 32 kompensiert die hinter der Gelenkachse 30 befindliche Masse des Elevons 7 zumindest teilweise, im vorliegenden Fall sogar zu 100%, und stellt damit als Massenausgleich eine Maßnahme gegen Ruder- und Flügelflattern und für ein angenehmeres Steuerverhalten dar. Schließlich bewirkt der Massenausgleich, dass die Elevons 7 nicht durch ihr Eigengewicht nach unten kippen, sondern auch ohne aerodynamische Anströmung kraftfrei in ihre gewünschte Neutralposition gebracht und dort gehalten werden können.

Das Spade 9 kann als ebene Platte ausgeführt sein. Im gezeigten Ausführungsbeispiel weist es ein tragendes aerodynamisches Profil auf. Jedenfalls trägt das Spade 9 wie schon erwähnt zur Reduzierung des am Elevon 7 um die Gelenkachse 30 wirkenden Klappenmomentes und damit zur Reduzierung der für die Steuerung aufzubringenden Handkräfte bei, wie es beim Einsatz an gewöhnlichen Querrudern im Stand der Technik bekannt ist. Beim vorliegenden Einsatz an den Elevons 7 kommt jedoch noch ein weiterer Einsatzzweck hinzu. Anders als bei reinen Querrudern schlagen nämlich die Elevons 7 nicht nur gegensinnig, sondern in ihrer Funktion als Höhenruder auch gleichsinnig aus. Dabei hat sich gezeigt, dass die am Flügelprofil der Tragflächen 3 wirkende aerodynamische Luftdruckverteilung dazu tendiert, die Elevons 7 um ihre Gelenkachse 30 entsprechend einem Pfeil 31 gleichsinnig nach oben zu saugen. Dies entspricht in der Wirkung einem ungewollten Höhenrudertrimm, den es auszugleichen gilt. In Zusatzfunktion zur Handkraftverringerung werden die Spades 9 gemäß der Erfindung für den Ausgleich dieses ungewollten Höhenrudertrimms herangezogen. Dazu sind sie gegenüber der Profillehne 34 bei neutralem Ruderausschlag um einen bestimmten Einstellwinkel y eingestellt. Im aerodynamischen Flug entsteht hierdurch sowie durch die optional vorhandene Spade-Profilierung am Spade 9 eine Kraft, die über den Hebelarm 33 als Moment um die Gelenkachse 30 wirkt. Das ansonsten am Elevon 7 auftretende aerodynamische Moment in Richtung des Pfeiles 31 kann damit zumindest näherungsweise vollständig ausgeglichen werden.

Der Einstellwinkel y und die Profilierung der Spades 9 sind hierfür derart getrimmt bzw. gewählt, dass die Elevons 7 im aerodynamischen Flug eine bzgl. der Nicksteuerung im Wesentlichen neutrale Trimmposition einnehmen und diese in Fig. 5 gezeigte Neutralposition auch ohne Aufbringen einer Handkraft beibehalten. Die Neutralposition ist im Regelfall zumindest näherungsweise die Position ohne Klappenausschlag, also bei einem neutralen Klappenwinkel von etwa 0°, wie in Fig. 5 gezeigt. Bei Bedarf kann aber auch eine abweichende Neutralposition der Elevons 7 durch Anpassung der Einstellwinkel y an den Spades 9 gewählt werden. In einem weiteren Aspekt wirken die Spades 9 noch als Maßnahme gegen Flattern.

Fig. 6 zeigt noch in einer perspektivischen Detailansicht die wesentlichen Elemente der im Rumpf 1 (Fig. 1) angeordneten Steuermechanik zur Ansteuerung der Elevons 7 (Fig. 1, 2, 5). Bei einer Steuerung des Fluggerätes im aerodynamischen Flug ist eine Ansteuerung des Seitenruders 37 (Fig. 1) in gewöhnlicher Weise über Pedale (nicht dargestellt) für eine Fußsteuerung vorgesehen. Die Roll- und Nicksteuerung erfolgt ebenfalls in gewöhnlicher Weise mittels eines üblichen Steuerknüppels 8. Die Verwendung von Elevons 7 erfordert jedoch eine kinematische Mischung der Bewegungsanteile des Steuerknüppels 8 gemäß der Darstellung nach Fig. 6.

Der von der Hand des Piloten in gewöhnlicherweise zu betätigende Steuerknüppel 8 ist wie üblich in Lagern 39, 40 derart kardanisch aufgehängt, dass er um die Längsachse x und um die Querachse y geschwenkt werden kann. Eine Schwenkung des Steuerknüppels 8 um die Längsachse x soll in eine Rollbewegung des Fluggerätes umgesetzt werden, wozu die Elevons 7 in ihrer Funktion als Querruder gegensinnig ausschlagen müssen. Eine Schwenkbewegung des Steuerknüppels 8 um die Querachse y (ziehen bzw. drücken) soll in eine Nickbewegung des Fluggerätes umgesetzt werden, wozu ein gleichsinniger Steuerausschlag der Elevons 7 in ihrer Funktion als Höhenruder erforderlich ist. Für eine kinematische Mischung dieser Bewegungen sind zwei Schubstangen 41 vorgesehen, welche unmittelbar an den Steuerknüppel 8 angrenzen und an diesem unterhalb der Lager 39, 40 gelenkig befestigt sind. Ausgehend von diesem unteren Ende des Steuerknüppels 8 erstrecken sich die Schubstangen 41 V-förmig nach hinten, wobei sie zwischen sich ein Öffnungswinkel von etwa 90° einschließen. An ihren hinteren, äußeren Enden sind die Schubstangen 41 gelenkig mit Umlenkhebeln 42 verbunden, welche ihrerseits auf einer gemeinsamen Basisplatte 38 schwenkbar gelagert sind. Von diesen Umlenkhebeln 42 gehen schließlich Bowdenzüge 43 aus, welche auf je einen der Elevons 7 einwirken.

Die V-förmige Anordnung der Schubstangen 41 bewirkt, dass eine Betätigung des Steuerknüppels 8 um die Querachse y zu einer gleichsinnigen Betätigung beider Schubstangen 41 führt, welche über die Umlenkhebel 42 und die Bowdenzüge 43 in einen gleichsinnigen Klappenausschlag beider Elevons 7 im Sinne eines "ziehen" oder eines "drücken" umgesetzt wird. Die Elevons 7 wirken damit in gewünschter Weise als Höhenruder zur aerodynamischen Nicksteuerung. Eine Betätigung des Steuerknüppels 8 um die Längsachse x hingegen führt zu einer gegensinnigen Betätigung der Schubstangen 41, welche über die Umlenkhebel 42 und die Bowdenzüge 43 in einen gegensinnigen Klappenausschlag beider Elevons 7 umgesetzt wird, womit diese in gewünschter Weise als Querruder zur aerodynamischen Rollsteuerung wirken. Über die Kröpfungswinkel der Umlenkhebel 42 lässt sich zudem eine Differenzierung des Querruderausschlages einstellen.

## Patentansprüche

1. Fluggerät, welches sich entlang einer Längsachse (x), einer Querachse (y) und einer Hochachse (z) erstreckt, wobei sich die Längsachse (x), die Querachse (y) und die Hochachse (z) in einem Konstruktionsschwerpunkt (CG) schneiden, umfassend mindestens ein Paar von Tragflächen (2, 3) für einen aerodynamischen Flug in einer durch die Längsachse (x) vorgegebenen Vorwärtsrichtung (u), einen hauptsächlich in der Vorwärtsrichtung (u) wirkenden Flugantrieb (10) für den aerodynamischen Flug, und einen hauptsächlich in Richtung der Hochachse (z) wirkenden Schwebeantrieb für einen Schwebeflug, wobei die Längsachse (x) und die Querachse (y) in der von ihnen aufgespannten Ebene vier Quadranten (I, II, III, IV) des Fluggerätes voneinander abgrenzen, und wobei der Schwebeantrieb in jedem Quadranten (I, II, III, IV) mindestens je eine um ihre Drehachse (15, 16, 17, 18) drehend antreibbare Hubluftschraube (11, 12, 13, 14) aufweist, wobei sich die Hubluftschrauben (11, 12, 13, 14) bezogen auf die Längsrichtung (x) paarweise seitlich gegenüberliegen, wobei bei einem seitlich sich gegenüberliegenden Paar von Hubluftschrauben (11, 12; 13, 14) die zugehörigen Drehachsen (15, 16; 17, 18) bezüglich der Hochachse (z) gegensinnig zur Seite geneigt sind und sich in einem Schnittpunkt (19, 20) treffen, wobei bei einem vor dem Konstruktionsschwerpunkt (CG) liegenden Paar von Hubluftschrauben (11, 12) der Schnittpunkt (19) der zugehörigen Drehachsen (15, 16) vor dem Schnittpunkt (20) der Drehachsen (17, 18) eines hinter dem Konstruktionsschwerpunkt (CG) liegenden Paares von Hubluftschrauben (13, 14) liegt, und wobei innerhalb eines Quadranten (I, II, III, IV) alle dort befindlichen Hubluftschrauben (11, 12, 13, 14) die gleiche Drehrichtung um ihre jeweilige Drehachse (15, 16, 17, 18) aufweisen,
**dadurch gekennzeichnet, dass** das Fluggerät als Tandemflügler mit einem vorderen Paar von Tragflächen (2) und mit einem hinteren Paar von Tragflächen (3) ausgebildet ist, wobei das vordere Paar von Tragflächen (2) und das hintere Paar von Tragflächen (3) eine im wesentlichen gleiche Spannweite aufweisen, wobei Tragflügelenden (4) der vorderen Tragflächen (2) mit zugeordneten Tragflügelenden (5) der hinteren Tragflächen (3) jeweils mittels eines Längsträgers (6) miteinander verbunden sind, und wobei die Hubluftschrauben (11, 12, 13, 14) insbesondere einschließlich ihrer Hubmotoren (25) an den Längsträgern (6) gelagert sind.

2. Fluggerät nach Anspruch 1,
**dadurch gekennzeichnet, dass** in jedem Quadranten (I, II, III, IV) jeweils mehrere und insbesondere je zwei um ihre Drehachse (15, 16, 17, 18) gleichsinnig drehend antreibbare Hubluftschrauben (11, 12, 13, 14) vorgesehen sind, wobei die Schnittpunkte (19) der Drehachsen (15, 16) der vor dem Konstruktionsschwerpunkt (CG) liegenden Paare von Hubluftschrauben (11, 12) vor den Schnittpunkten (20) der Drehachsen (17, 18) der hinter dem Konstruktionsschwerpunkt (CG) liegenden Paare von Hubluftschrauben (13, 14) liegen.

3. Fluggerät nach Anspruch 1 oder 2,
**dadurch gekennzeichnet, dass** im bezogen auf die Vorwärtsrichtung (u) vorderen rechten Quadranten (I) und im hinteren linken Quadranten (III) die Drehrichtung aller Hubluftschrauben (11, 13) gegen den Uhrzeigersinn ist, dass im bezogen auf die Vorwärtsrichtung (u) vorderen linken Quadranten (II) und im hinteren rechten Quadranten (IV) die Drehrichtung aller Hubluftschrauben (12, 14) im Uhrzeigersinn ist, und dass alle Drehachsen (15, 16, 17, 18) nach außen geneigt sind.

4. Fluggerät nach einem der Ansprüche 1 bis 3,
**dadurch gekennzeichnet, dass** die Drehachsen (15, 16, 17, 18) bezüglich der Hochachse um einen Seitenwinkel (δ) zur Seite geneigt sind, wobei der Seitenwinkel (δ) in einem Bereich von 3° bis 8° liegt und insbesondere etwa 5° beträgt.

5. Fluggerät nach einem der Ansprüche 1 bis 4,
**dadurch gekennzeichnet, dass** die Drehachsen (15, 16, 17, 18) der Hubluftschrauben (11, 12, 13, 14) bezüglich der Hochachse (z) um einen Kippwinkel (ε) nach vorne geneigt sind, wobei der Nickwinkel (ε) in einem Bereich von 2° bis 5° liegt und insbesondere etwa 3,5° beträgt.

6. Fluggerät nach einem der Ansprüche 1 bis 5,
**dadurch gekennzeichnet, dass** sich die Hubluftschrauben (11, 12, 13, 14) in zugehörigen Drehkreisen (21, 22, 23, 24) bewegen, wobei in Richtung der Längsachse (x) hintereinander liegende Drehkreise (21, 24; 22, 23) in Richtung der Drehachsen (15, 16, 17, 18) einen Höhenversatz aufweisen und sich anteilig überlappen.

7. Fluggerät nach einem der Ansprüche 1 bis 6,
**dadurch gekennzeichnet, dass** die Hubluftschrauben (11, 12, 13, 14) jeweils insbesondere zwei Luftschraubenblätter (44, 45) aufweisen, wobei die Luftschraubenblätter (44, 45) bezüglich der Drehachsen (15, 16, 17, 18) in einem Konuswinkel (φ) angeordnet sind, und wobei der Konuswinkel (φ) kleiner als 180° ist.

8. Fluggerät nach einem der Ansprüche 1 bis 7,
**dadurch gekennzeichnet, dass** das vordere Paar von Tragflächen (2) eine erste mittlere Flügeltiefe (l₁) aufweist, dass das hintere Paar von Tragflächen (3) eine zweite mittlere Flügeltiefe (l₂) aufweist, und dass die erste mittlere Flügeltiefe (l₁) in einem Bereich von 30% bis 40% der zweiten mittleren Flügeltiefe (l₂) liegt.

9. Fluggerät nach einem der Ansprüche 1 bis 8,
**dadurch gekennzeichnet, dass** das vordere Paar von Tragflächen (2) in Richtung der Hochachse (z) höher liegt als das hintere Paar von Tragflächen (3).

10. Fluggerät nach einem der Ansprüche 1 bis 9,
**dadurch gekennzeichnet, dass** das Fluggerät für eine aerodynamische Nick- und Rollsteuerung mit Elevons (7) versehen ist.

11. Fluggerät nach Anspruch 10,
**dadurch gekennzeichnet, dass** die Elevons (7) am hinteren Paar von Tragflächen (3) angeordnet sind.

12. Fluggerät nach Anspruch 10 oder 11,
**dadurch gekennzeichnet, dass** die Elevons (7) mittels eines Steuerknüppels (8) bewegt werden, wobei zwei unmittelbar an den Steuerknüppel (8) angrenzende Schubstangen (41) V-förmig angeordnet sind und über Umlenkhebel (42) sowie weitere Übertragungselemente insbesondere in Form von Bowdenzügen (43) jeweils mit je einem Elevon (7) in Wirkverbindung stehen.

13. Fluggerät nach einem der Ansprüche 10 bis 12,
**dadurch gekennzeichnet, dass** die Elevons (7) mit Spades (9) versehen sind, welche derart getrimmt sind, dass die Elevons (7) im aerodynamischen Flug eine bezüglich der Nicksteuerung im wesentliche neutrale Trimmposition einnehmen.

14. Fluggerät nach einem der Ansprüche 10 bis 13,
**dadurch gekennzeichnet, dass** im Bereich eines Spades (9) eine Ausgleichsmasse (32) angeordnet ist.

## Claims

1. Aircraft which extends along a longitudinal axis (x), a transverse axis (y) and a vertical axis (z), wherein the longitudinal axis (x), the transverse axis (y) and the vertical axis (z) intersect in a centre of gravity of construction (CG), comprising at least one pair of wings (2, 3) for an aerodynamic flight in a forward direction (u) predefined by the longitudinal axis (x), a flight drive (10) acting mainly in the forward direction (u) for the aerodynamic flight, and a hover drive acting mainly in the direction of the vertical axis (z) for a hover flight, wherein the longitudinal axis (x) and the transverse axis (y) delimit in the plane defined by them four quadrants (I, II, III, IV) of the aircraft from one another, and wherein the hover drive in each quadrant (I, II, III, IV) has at least one propeller (11, 12, 13, 14) each which is able to be rotationally driven about its axis of rotation (15, 16, 17, 18), wherein the propellers (11, 12, 13, 14) are laterally opposite one another in pairs in terms of the longitudinal direction (x), wherein in the case of a laterally opposite pair of propellers (11, 12; 13, 14) the associated axes of rotation (15, 16; 17, 18) in terms of the vertical axis (z) are inclined in opposite directions towards the side and meet at an intersection point (19, 20), wherein in the case of a pair of propellers (11, 12) lying in front of the centre of gravity of construction (CG), the intersection point (19) of the associated axes of rotation (15, 16) lies in front of the intersection point (20) of the axes of rotation (17, 18) of a pair of propellers (13, 14) lying behind the centre of gravity of construction (CG), and wherein within a quadrant (I, II, III, IV) all propellers (11, 12, 13, 14) located therein have the same direction of rotation around their respective axis of rotation (15, 16, 17, 18),
**characterized in that** the aircraft is designed as a tandem plane having a front pair of wings (2) and having a rear pair of wings (3), wherein the front pair of wings (2) and the rear pair of wings (3) have a substantially identical span, wherein wing ends (4) of the front wings (2) are in each case connected together to assigned wing ends (5) of the rear wings (3) by means of a longitudinal support (6), and wherein the propellers (11, 12, 13, 14), in particular including their lift motors (25), are mounted on the longitudinal supports (6).

2. Aircraft according to claim 1,
**characterized in that** provided in each quadrant (I, II, III, IV) are in each case a plurality of, and in particular in each case two, propellers (11, 12, 13, 14) which are able to be rotationally driven in the same direction about their axis of rotation (15, 16, 17, 18), wherein the intersection points (19) of the axes of rotation (15, 16) of the pairs of propellers (11, 12) lying in front of the centre of gravity of construction (CG) lie in front of the intersection points (20) of the axes of rotation (17, 18) of the pairs of propellers (13, 14) lying behind the centre of gravity of construction (CG).

3. Aircraft according to claim 1 or 2,
**characterized in that**, in terms of the forward direction (u), in the front right quadrant (I) and in the rear left quadrant (III) the direction of rotation of all propellers (11, 13) is anti-clockwise, **in that**, in terms of the forward direction (u), in the front left quadrant (II) and in the rear right quadrant (IV) the direction of rotation of all propellers (12, 14) is clockwise, and **in that** all axes of rotation (15, 16, 17, 18) are inclined outwards.

4. Aircraft according to one of claims 1 to 3,
**characterized in that** the axes of rotation (15, 16, 17, 18) in terms of the vertical axis are inclined towards the side by a lateral angle (δ), wherein the lateral angle (δ) is in a range from 3° to 8°, and is in particular approximately 5°.

5. Aircraft according to one of claims 1 to 4,
**characterized in that** the axes of rotation (15, 16, 17, 18) of the propellers (11, 12, 13, 14) in terms of the vertical axis (z) are tilted forward by a tilt angle (ε), wherein the pitch angle (ε) is in a range from 2° to 5°, and is in particular approximately 3.5°.

6. Aircraft according to one of claims 1 to 5,
**characterized in that** the propellers (11, 12, 13, 14) move in associated rotation circles (21, 22, 23, 24), wherein rotation circles (21, 24; 22, 23) that are successive in the direction of the longitudinal axis (x) have a vertical offset in the direction of the axes of rotation (15, 16, 17, 18) and have a proportional overlap.

7. Aircraft according to one of claims 1 to 6,
**characterized in that** the propellers (11, 12, 13, 14) have in each case in particular two propeller blades (44, 45), wherein the propeller blades (44, 45) in terms of the axes of rotation (15, 16, 17, 18) are disposed at a cone angle (φ), and wherein the cone angle (φ) is less than 180°.

8. Aircraft according to one of claims 1 to 7,
**characterized in that** the front pair of wings (2) has a first mean wing depth (l₁), **in that** the rear pair of wings (3) has a second mean wing depth (l₂), and **in that** the first mean wing depth (l₁) is in the range of 30% to 40% of the second mean wing depth (l₂).

9. Aircraft according to one of claims 1 to 8,
**characterized in that** the front pair of wings (2) in the direction of the vertical axis (z) is higher than the rear pair of wings (3).

10. Aircraft according to one of claims 1 to 9,
**characterized in that** the aircraft for an aerodynamic pitch and roll control is provided with elevons (7).

11. Aircraft according to claim 10,
**characterized in that** the elevons (7) are disposed on the rear pair of wings (3).

12. Aircraft according to claim 10 or 11,
**characterized in that** the elevons (7) are moved by means of a joystick (8), wherein two push rods (41) directly adjacent to the joystick (8) are arranged in a V-shape and are in each case operatively connected to one elevon (7) each via deflection levers (42) and further transmission elements, in particular in the form of Bowden cables (43).

13. Aircraft according to one of claims 10 to 12,
**characterized in that** the elevons (7) are provided with spades (9) which are trimmed in such a manner that the elevons (7) in the aerodynamic flight assume a substantially neutral trim position in terms of pitch control.

14. Aircraft according to one of claims 10 to 13,
**characterized in that** a compensation mass (32) is disposed in the region of a spade (9).

## Revendications

1. Aéronef, qui s'étend le long d'un axe longitudinal (x), d'un axe transversal (y) et d'un axe vertical (z), l'axe longitudinal (x), l'axe transversal (y) et l'axe vertical (z) se coupant en un centre de gravité géométrique (CG), comprenant au moins une paire d'ailes (2, 3) pour un vol aérodynamique dans une direction avant (u) prédéfinie par l'axe longitudinal (x), un entraînement de vol (10) agissant principalement dans la direction avant (u) pour le vol aérodynamique, et un entraînement en suspension agissant principalement en direction de l'axe vertical (z) pour un vol stationnaire, l'axe longitudinal (x) et l'axe transversal (y) délimitant quatre quadrants (I, II, III, IV) de l'aéronef les uns des autres dans le plan qu'ils forment, et l'entraînement en suspension dans chaque quadrant (I, II, III, IV) comportant au moins respectivement une hélice de levage (11, 12, 13, 14) pouvant être entraînée en rotation autour de son axe de rotation (15, 16, 17, 18), les hélices de levage (11, 12, 13, 14) se faisant face latéralement par paires par rapport à la direction longitudinale (x), dans le cas d'une paire d'hélices de levage (11, 12 ; 13, 14) se faisant face latéralement, les axes de rotation (15, 16 ; 17, 18) associés étant inclinés vers le côté en sens opposé par rapport à l'axe vertical (z) et se rejoignant en un point d'intersection (19, 20), le point d'intersection (19) des axes de rotation (15, 16) associés étant situé devant le point d'intersection (20) des axes de rotation (17, 18) d'une paire d'hélices de levage (13, 14) située derrière le centre de gravité géométrique (CG) dans le cas d'une paire d'hélices de levage (11, 12) située devant le centre de gravité géométrique (CG), et toutes les hélices de levage (11, 12, 13, 14) situées à cet endroit présentant le même sens de rotation autour de leur axe de rotation (15, 16, 17, 18) respectif à l'intérieur d'un quadrant (I, II, III, IV),
**caractérisé en ce que** l'aéronef est formé comme un avion à ailes en tandem avec une paire avant d'ailes (2) et avec une paire arrière d'ailes (3), la paire avant d'ailes (2) et la paire arrière d'ailes (3) présentant sensiblement la même portée, des extrémités (4) d'aile des ailes avant (2) étant reliées entre elles par des extrémités (5) d'aile associées des ailes arrière (3) respectivement au moyen d'un longeron (6), et les hélices de levage (11, 12, 13, 14), en particulier leurs moteurs de levage (25) y compris, étant montées sur les longerons (6).

2. Aéronef selon la revendication 1,
**caractérisé en ce que** dans chaque quadrant (I, II, III, IV) sont prévues plusieurs et en particulier deux hélices de levage (11, 12, 13, 14) pouvant être entraînées en rotation dans le même sens autour de leur axe de rotation (15, 16, 17, 18), les points d'intersection (19) des axes de rotation (15, 16) des paires d'hélices de levage (11, 12) situées devant le centre de gravité géométrique (CG) étant situés devant les points d'intersection (20) des axes de rotation (17, 18) des paires d'hélices de levage (13, 14) situées derrière le centre de gravité géométrique (CG).

3. Aéronef selon la revendication 1 ou 2,
**caractérisé en ce que** dans le quadrant avant droit (I) par rapport à la direction avant (u) et dans le quadrant arrière gauche (III), le sens de rotation de toutes les hélices de levage (11, 13) est contraire au sens des aiguilles d'une montre, que, dans le quadrant avant gauche (II) par rapport à la direction avant (u) et dans le quadrant arrière droit (IV), le sens de rotation de toutes les hélices de levage (12, 14) est dans le sens des aiguilles d'une montre, et que tous les axes de rotation (15, 16, 17, 18) sont inclinés vers l'extérieur.

4. Aéronef selon l'une des revendications 1 à 3,
**caractérisé en ce que** les axes de rotation (15, 16, 17, 18) sont inclinés vers le côté d'un angle latéral (δ) par rapport à l'axe vertical, l'angle latéral (δ) se trouvant dans une plage de 3° à 8° et étant en particulier d'environ 5°.

5. Aéronef selon l'une des revendications 1 à 4,
**caractérisé en ce que** les axes de rotation (15, 16, 17, 18) des hélices de levage (11, 12, 13, 14) sont inclinés vers l'avant d'un angle de basculement (ε) par rapport à l'axe vertical (z), l'angle de tangage (ε) étant compris dans une plage de 2° à 5° et étant en particulier d'environ 3,5°.

6. Aéronef selon l'une des revendications 1 à 5,
**caractérisé en ce que** les hélices de levage (11, 12, 13, 14) se déplacent dans des cercles de rotation (21, 22, 23, 24) associés, des cercles de rotation (21, 24; 22, 23) situés les uns derrière les autres en direction de l'axe longitudinal (x) présentant un décalage en hauteur en direction des axes de rotation (15, 16, 17, 18) et se chevauchant proportionnellement.

7. Aéronef selon l'une des revendications 1 à 6,
**caractérisé en ce que** les hélices de levage (11, 12, 13, 14) comportent chacune en particulier deux aubes (44, 45) d'hélice, les aubes (44, 45) d'hélice étant disposées selon un angle conique (φ) par rapport aux axes de rotation (15, 16, 17, 18) et l'angle conique (φ) étant inférieur à 180°.

8. Aéronef selon l'une des revendications 1 à 7,
**caractérisé en ce que** la paire avant d'ailes (2) présente une première profondeur moyenne d'aile (l₁), que la paire arrière d'ailes (3) présente une deuxième profondeur moyenne d'aile (l₂), et que la première profondeur moyenne d'aile (l₁) se situe dans une plage de 30% à 40% de la deuxième profondeur moyenne d'aile (l₂).

9. Aéronef selon l'une des revendications 1 à 8,
**caractérisé en ce que** la paire avant d'ailes (2) est située plus haut en direction de l'axe vertical (z) que la paire arrière d'ailes (3).

10. Aéronef selon l'une des revendications 1 à 9,
**caractérisé en ce que** l'aéronef est muni d'élevons (7) pour la commande aérodynamique de tangage et de roulis.

11. Aéronef selon la revendication 10,
**caractérisé en ce que** les élevons (7) sont disposés sur la paire arrière d'ailes (3).

12. Aéronef selon la revendication 10 ou 11,
**caractérisé en ce que** les élevons (7) sont déplacés au moyen d'un manche de commande (8), deux tiges de poussée (41) jouxtant directement le manche de commande (8) étant disposées en forme de V et étant chacune en liaison active avec un élevon (7) par des leviers de renvoi (42) et d'autres éléments de transmission, en particulier sous la forme de câbles Bowden (43).

13. Aéronef selon l'une des revendications 10 à 12,
**caractérisé en ce que** les élevons (7) sont munis de palettes aérodynamiques (9) qui sont ajustées de telle manière que les élevons (7) adoptent, en vol aérodynamique, une position d'ajustage sensiblement neutre par rapport à la commande de tangage.

14. Aéronef selon l'une des revendications 10 à 13,
**caractérisé en ce qu'**une masse d'équilibrage (32) est disposée dans la zone d'une palette aérodynamique (9).
